(19) **Europäisches Patentamt / European Patent Office / Office européen des brevets**

(11) **EP 3 683 353 A1**

(12) **EUROPEAN PATENT APPLICATION**
published in accordance with Art. 153(4) EPC

(43) Date of publication:
**22.07.2020 Bulletin 2020/30**

(21) Application number: **18854696.4**

(22) Date of filing: **08.08.2018**

(51) Int Cl.:
*D06M 15/41* (2006.01)   *D02G 3/44* (2006.01)
*D06M 15/693* (2006.01)   *D06M 101/32* (2006.01)
*D06M 101/34* (2006.01)   *D06M 101/36* (2006.01)

(86) International application number:
**PCT/JP2018/029751**

(87) International publication number:
**WO 2019/049590 (14.03.2019 Gazette 2019/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.09.2017   JP 2017173912**
**11.09.2017   JP 2017173913**
**11.09.2017   JP 2017173914**

(71) Applicant: **Toray Industries, Inc.**
**Tokyo 103-8666 (JP)**

(72) Inventors:
• **HAYAKAWA, Yoshinori**
  **Okazaki-shi**
  **Aichi 444-8522 (JP)**
• **IWAMA, Ryohei**
  **Okazaki-shi**
  **Aichi 444-8522 (JP)**
• **SASAKI, Yoshito**
  **Okazaki-shi**
  **Aichi 444-8522 (JP)**

(74) Representative: **Mewburn Ellis LLP**
**Aurora Building**
**Counterslip**
**Bristol BS1 6BX (GB)**

(54) **FIBER CORD FOR REINFORCING RUBBER**

(57)   A fiber cord for reinforcing rubber characterized by comprising an organic fiber covered with a resin for which the average integration value of hardness measured by AFM is 150 MPa or less. The present invention provides a fiber cord for reinforcing rubber which could not be achieved with prior art, with improved initial adhesiveness and heat-resistant adhesiveness as well as excellent stress relaxation for the rubber-cord composite.

**EP 3 683 353 A1**

**Description**

TECHNICAL FIELD

The present invention relates to fiber cords for use in tires, hoses, belts and the like.

BACKGROUND ART

Fibers such as polyester and aramid have been widely used as reinforcing materials for rubber products such as tires, hoses and belts because of their high strength, elastic modulus and thermal dimensional stability. However, if such a fiber is embedded in a rubber product as a reinforcing material and used for a long period of time, there may occur problems such as a decline in the adhesion with rubber, deterioration of the cords to cause stress relaxation in the rubber-cord composite, and a rapid decrease in the caulking pressure in rubber hoses that contain the fiber, making them unable to work satisfactorily.

As a method for solving these problems, the following proposals have been made.

Patent document 1 discloses a rubber-reinforcing polyester fiber characterized in that when the polyester fiber is treated with a treatment agent containing a polyepoxide compound at the time of spinning or stretching, and then, after processing it into a cord, treated with a treatment agent containing a resorcinol-formalin-rubber latex (RFL) and a chlorophenol based compound, the Gurley hardness of the treated cord can be controlled at 300 mg or less by performing the treatment after adding a polybutadiene based rubber latex blended in the rubber latex.

Patent document 2 discloses a hose-reinforcing polyester fiber cord including a polyester fiber to which a polyepoxide compound is added beforehand, and a treatment agent containing a resorcinol-formalin-rubber latex (RFL) and chloro-modified resorcinol (P), wherein the treatment agent satisfies all of the following requirements:

　　(A) R/F = 1/0.5 to 1/3 (by mole),
　　(B) RF/L = 1/3 to 1/15 (by weight),
　　(C) P/RFL = 1/1 to 1/5 (by weight), and
　　(D) RF aging time: 4 to 8 hours

(wherein R represents the amount of resorcinol; F represents the amount of formalin, L represents the amount of rubber latex; P represents the amount of chloro-modified resorcinol, RF represents the amount of resorcinol and formalin, and RFL represents the amount of resorcinol-formalin-rubber latex.)

Patent Document 3 discloses a method for reducing the stress relaxation of a rubber hose by employing a multiple copolymer rubber composed mainly of an acrylonitrile-butadiene rubber blend and an acrylic rubber based blend in an inner tube rubber layer.

PRIOR ART DOCUMENTS

PATENT DOCUMENTS

[0006]

　　Patent document 1: Japanese Unexamined Patent Publication (Kokai) No. HEI-11-286876
　　Patent document 2: Japanese Unexamined Patent Publication (Kokai) No. 2008-202182
　　Patent document 3: Japanese Unexamined Patent Publication (Kokai) No. SHO-62-278395

SUMMARY OF INVENTION

PROBLEMS TO BE SOLVED BY THE INVENTION

However, in Patent Documents 1 and 2, although the initial adhesiveness is sufficiently high, the heat resistant adhesion strength is not sufficiently high. According to Patent Document 3, although an improvement in stress relaxation is achieved by modification of the rubber, no improvement in stress relaxation is achieved by reinforcing fibers, and both the initial adhesive strength and the heat resistant adhesion strength are not sufficiently high.

Thus, an object of the present invention is to provide a fiber cord for rubber reinforcement that exhibits improved heat resistant adhesion strength between fibers and rubber, which cannot be achieved by the conventional techniques, and that hardly suffers stress relaxation in the rubber-cord composite.

MEANS OF SOLVING THE PROBLEMS

The present invention adopts the following means in order to solve the aforementioned problems. Specifically, the rubber-reinforcing fiber cord according to the present invention is a rubber-reinforcing fiber cord characterized in that the organic fiber used is coated with a resin having an integral mean hardness value of 150 MPa or less as measured by AFM. In the rubber-reinforcing fiber cord according to the present invention, meeting the following conditions (1) to (8) is more preferable, and meeting these conditions promises further improved effects.

(1) The Gurley cord hardness is 12 mN or less.
(2) The separation between the rubber and single yarns after the vulcanization step is 10% or less of the length of the rubber-single yarn interface.
(3) The stress relaxation rate measured in the rubber-cord composite compression test is 50% or less.
(4) The stress relaxation inclination measured in the rubber-cord composite compression test is 27 or less.
(5) The maximum stress measured in the rubber-cord composite compression test is 500 N or more.
(6) The ratio (A/B) of the major axis A to the minor axis B of the cross section of the rubber-reinforcing fiber cord is 1.3 or more.
(7) The air diffusivity of the cord embedded in the rubber is 100 (mm·1000) / (min·%·dtex) or less.
(8) The organic fiber includes at least one selected from polyethylene terephthalate, nylon 66, and aramid.

ADVANTAGEOUS EFFECTS OF THE INVENTION

The present invention serves to provide a rubber-reinforcing fiber cord that achieves improved heat resistant adhesion when used in rubber products, which is not achievable with conventional rubber-reinforcing fiber cords, and improved stress relaxation in the rubber-cord composite.

BRIEF DESCRIPTION OF THE DRAWINGS

[Fig. 1] is a perspective view of a Gurley code hardness measuring instrument.
[Fig. 2] is a schematic diagram showing a relationship among the cord cross section, major axis A, and minor axis B.
[Fig. 3] is a schematic diagram showing the proportion of the separation between the rubber and a single yarn after the vulcanization step.
[Fig. 4] is a schematic diagram showing a positional relationship between the cord and the rubber plate in a sample for rubber-cord composite compression test.
[Fig. 5] is a schematic diagram of a measuring piece and a measuring device used for measuring the air diffusivity.

DESCRIPTION OF PREFERRED EMBODIMENTS

The invention is described in more detail below.
The rubber-reinforcing fiber cord according to the present invention (hereinafter occasionally referred to as the cord) is a cord made of an organic fiber. The rubber-reinforcing fiber cord according to the present invention is used suitably in various rubber members for various applications such as tires, belts, and hoses, and the like for automobiles, and serves to improve their durability. Here, the term "cord" refers to a twisted organic fiber, an organic fiber twisted and then heat-treated, or an organic fiber twisted, coated with an adhesive, and then heat-treated, and a simply twisted organic fiber may be particularly referred to as a raw cord or a twisted cord.
An organic fiber used for such a rubber-reinforcing fiber cord is preferably in the form of a multifilament. There are no particular restrictions on the material used to form these organic fibers, but they preferably contain at least one selected from the group consisting of polyethylene terephthalate, polyethylene naphthalate, nylon 6, nylon 66, nylon 46, polyvinyl alcohol, rayon, and aramid from the viewpoint of versatility, durability, and industrial productivity. In particular, it is more preferable for them to contain at least one selected from the group consisting of polyethylene terephthalate, nylon 66, and aramid from the viewpoint of versatility, durability, and industrial productivity.
The organic fiber used in the present invention may already contain a polyepoxide compound. A typical polyepoxide compound that can be used for the invention is a compound that contains at least two or more epoxy groups per molecule in an amount of 0.1 g equivalent or more per 100 g of the compound. Specific examples include reaction products of polyhydric alcohols such as pentaerythritol, ethylene glycol, polyethylene glycol, propylene glycol, glycerol, and sorbitol with halogen-containing epoxides such as epichlorohydrin; polyepoxide compounds obtained by oxidizing unsaturated compounds with hydrogen peroxide etc. such as aromatic polyepoxides including 3,4-epoxycyclohexylme-

EP 3 683 353 A1

thyl-3,4-epoxycyclohexene carboxylate, bis(3,4-epoxy-6-methylcyclohexylmethyl) adipate, and phenol novolac type, hydroquinone type, biphenyl type, bisphenol S type, brominated novolac type, xylene modified novolac type, phenolglyoxal type, trisoxyphenylmethane type, tris phenol PA type, and bisphenol type polyepoxides. Particularly preferable are sorbitol glycidyl ether type and cresol novolac type polyepoxides.

These compounds are usually used in the form of an emulsified liquid or a solution and are applied to organic fibers. To prepare a solution, a compound may be used as it is or dissolved in water. To prepare an emulsified liquid, a compound is dissolved in a small amount of a solvent as required and emulsified using a known emulsifier such as sodium alkylbenzene sulfonate, sodium dioctylsulfosuccinate, and nonylphenol ethylene oxide adducts.

Such a polyepoxide compound may be applied together with a spinning oil agent in an organic fiber yarn formation step. The amount of the polyepoxide compound to be added at this time is preferably in the range of 0.05% to 5% by weight relative to the weight of the organic fiber. If the amount of the adhered polyepoxide compound is controlled in the above range, sufficiently large effects of the polyepoxide compound can be realized and sufficiently strong adhesion between the organic fiber and the rubber can be achieved, allowing the cord to maintain a required flexibility and ensuring high processability in the subsequent steps.

The organic fiber used in the present invention is not subject to restrictions associated with fineness and the number of filaments, but a total fineness of 200 to 5,000 dtex and a filament number of 30 to 1,000 are usually preferable, and a total fineness of 250 to 3,000 dtex and a filament number of 50 to 500 filaments are particularly preferable. If it is less than 200 dtex, the strength of the cord may be insufficient, whereas if it is more than 5,000 dtex, the cord may become thick and the handleability may deteriorate. If the number is less than 30 filaments, the cord may be hardened and the handleability may deteriorate. If it is more than 500 filaments, the amount of fluff may increase and the quality may deteriorate.

The rubber-reinforcing fiber cord according to the present invention is usually prepared by twisting such organic fiber as described above to form a raw cord (twisted cord), and then treating the raw cord with an adhesive.

It is preferable that the organic fiber or the raw cord provided with an adhesive is dried (dry treatment) at 70°C to 150°C for 0.5 to 5 minutes, heat-treated (hot treatment) at 180°C to 220°C for 0.5 to 5 minutes, and then heat-treated (hereinafter referred to as normalization treatment) at 180°C to 220°C for 0.5 to 5 minutes for controlling the physical properties of the cord. In this way, a coating film of an adhesive can be formed on the fiber surface, but the drying step can be omitted in some cases. Although there are no restrictions on the upper limit of the temperature, setting the heat treatment temperature within the above range makes it possible to form a softer adhesive film and serves to realize stronger adhesion between the rubber and the resin layer at the time of vulcanization performed to combine the rubber and the cord, thereby leading to a sufficiently large adhesive strength. On the other hand, when the temperature of the hot treatment and the normalization treatment is less than 180°C, the adhesion with the rubber may become insufficient, and therefore it is more preferable to set the temperature to 180°C or more. The cord tension during the dry treatment is preferably 0.1 to 2.0 cN/dTex. Setting the strength in this range allows the strength of the cord to be maintained at a suitable level. Furthermore, setting the cord tension at the time of the dry treatment to 1.0 to 2.0 cN/dTex is more preferable because it serves to allow the adhesive to be localized on the cord surface, and the maximum stress in the rubber-cord complex compression test will be increased.

The organic fiber or the raw cord may be subjected to a mechanical softening treatment in order to lower the cord hardness after adding an adhesive and carrying out the drying and heat treatment steps (the cord at this stage is occasionally referred to as the treated cord). Here, the mechanical softening treatment is a treatment designed so that the resin cured during the dry heat treatment is softened by bending the cord using an edge blade.

The angle to which the cord is bent by the edge blade is preferably 100° to 130°, more preferably 115° to 125°. Setting the bending angle within the above range allows the resin to be softened effectively.

The cord tension in the mechanical softening treatment step is preferably 0.5 to 5.0 cN/dTex, more preferably 3.0 to 4.0 cN/dTex. Setting the cord tension within the above range allows the cord to be softened within a range in which a favorable cord strength can be maintained.

When twisting the organic fiber, the twist coefficient K is preferably in the range of $200 \leq K \leq 2000$, more preferably $200 \leq K \leq 1,500$. Setting the twist coefficient within this range allows the cord to have a high fatigue resistance and a high strength.

Here, the twist coefficient K is expressed by the following formula.

$$K = T \times D^{1/2}$$

(K: twist coefficient, T: number of twists per unit length (twists/10 cm), and D: total fineness in dTex)

For the preparation of an adhesive, an RFL treatment agent prepared by adding a rubber latex (L) to a resorcin-formalin initial condensate (RF), which is used commonly, may be used to realize a practicably high rubber adhesiveness.

The RFL adhesive includes a resorcinol-formalin-rubber latex (RFL). The resorcinol-formalin-rubber latex is a mixture containing a resorcinol-formaldehyde initial condensate and a rubber latex. The resorcinol-formalin-rubber latex (RFL) is preferably prepared particularly by using a resorcinol-formaldehyde initial condensate obtained through initial condensation under the existence of an alkaline catalyst. For example, resorcinol and formaldehyde are added and mixed in an alkaline aqueous solution containing an alkaline compound such as sodium hydroxide and left at room temperature for several hours to effect initial condensation of the resorcinol and formaldehyde, followed by adding a rubber latex to form a mixed emulsion.

The resorcinol-formaldehyde initial condensate used should have a resorcinol to formaldehyde ratio by mole in the range of 1.0:0.30 to 1.0:5.0, preferably 1.0:0.75 to 1.0:2.0. Good adhesion can be obtained by setting the mole ratio of formaldehyde in the above range.

Examples of the rubber latex used for the preparation of a resorcinol-formalin-rubber latex includes, for example, natural rubber latex, butadiene rubber latex, styrene-butadiene rubber latex, vinylpyridine-styrene-butadiene rubber latex, nitrile rubber latex, hydrogenated nitrile rubber latex, chloroprene rubber latex, chlorosulfonated rubber latex, and ethylene-propylene-diene rubber latex, which may be used alone or in combination.

The latex used preferably has a glass transition temperature of -30°C or less. The use of a latex having a glass transition temperature not higher than the aforementioned temperature permits the formation of a softer adhesive film and ensures stronger adhesion between the rubber and the resin layer at the time of vulcanization performed for combining the rubber and the cord, thereby realizing a sufficiently large adhesive strength.

For the resorcinol-formalin-rubber latex, the blending ratio between the resorcinol-formaldehyde initial condensate and the rubber latex (resorcinol-formaldehyde initial condensate / rubber latex) is preferably 1/8 or less in terms of solid content by weight. Setting the blend ratio within the above range makes it possible to form a soft adhesive film and serves to realize stronger adhesion between the rubber and the resin layer at the time of vulcanization that is performed to combine the rubber and the cord, thereby leading to a sufficiently large adhesive strength.

The rubber-reinforcing fiber cord according to the present invention is a cord coated with a resin having an integral mean hardness value measured by AFM (atomic force microscopy) of 150 MPa or less.

The hardness can be represented in terms of dynamic compressive complex modulus determined by observing the geometric image of a sample using an AFM and cantilever and analyzing the resulting force curve (fitting based on the JKR theory described in the following reference document: Johnson, K. L., Kendall K. and Roberts, A. D., Surface energy and the contact of elastic solids, Proceedings of the Royal Society of London, Series A, Vol. 324 (1971), pp. 301-313).

Coating the cord with a resin having an integral mean hardness value measured by AFM (atomic force microscopy) of 150 MPa or less, more preferably 100 MPa or less, serves to enhance the adhesion between the rubber and the resin layer during vulcanization that is performed to combine the rubber and the cord, thereby leading to a sufficiently strong adhesion. If it is more than 150 MPa, the resin will be so hard that the adhesion to the rubber at the time of vulcanization will be lower, resulting in an insufficient adhesive strength.

There are no specific limitations on the method for controlling the integral mean resin hardness value measured by AFM at 150 MPa or less, but it can be achieved by, for example, using only a latex (L) having a glass transition temperature of -30°C or less, adding an adhesive having a mixing ratio between the resorcinol-formaldehyde initial condensate and rubber latex (resorcinol-formaldehyde initial condensate / rubber latex) of 1/8 or less by solid content weight, and then performing heat treatment at a temperature of 180°C to 220°C after the addition of the adhesive.

The Gurley cord hardness of the rubber-reinforcing fiber cord according to the present invention is preferably 12 mN or less, more preferably 10 mN or less. Here, the Gurley cord hardness represents the bending stress of the cord, and the flexibility of the cord increases as the hardness decreases. Setting the hardness to 12 mN or less serves to increase the conformity of the cord to the rubber is improved in the composite composed of the rubber and the cord, and strong adhesion can be obtained. There are no specific limitations on the method for setting the Gurley cord hardness to 12 mN or less, but it can be achieved by performing heat treatment at a temperature of 180°C to 220°C after the addition of an adhesive and controlling the tension in the mechanical softening treatment step at 0.5 cN to 5.0 cN/dTex.

For the rubber-reinforcing fiber cord according to the present invention, the separation between the rubber and single yarns after the vulcanization step is preferably 10% or less, more preferably 7% or less, of the rubber-single yarn interface length. If it is 10% or less, the adhesion with the rubber in the vulcanization step is improved, leading to a sufficiently large adhesive strength.

There are no specific limitations on the method for controlling the separation between the rubber and single yarns after the vulcanization step at 10% or less of the rubber-single yarn interface length, but it can be achieved by, for example, using only a latex (L) having a glass transition temperature of -30°C or less, adding an adhesive having a mixing ratio between the resorcinol-formaldehyde initial condensate and rubber latex (resorcinol-formaldehyde initial condensate / rubber latex) of 1/8 or less by solid content weight, and then performing heat treatment at a temperature of 180°C to 220°C after the addition of the adhesive. Here, the term "separation" refers to the portion in which a gap is present between the single yarns and the rubber.

The rubber-reinforcing fiber cord according to the present invention preferably has a stress relaxation rate of 50% or less, more preferably 30% or less in the rubber-cord composite compression test. The stress relaxation rate is expressed by the following equation wherein the maximum stress (Tmax) is the stress at the moment the maximum compression is applied and T is the stress after leaving the sample for 2 hours in the rubber-cord composite compression test.

$$\text{Stress relaxation rate (\%)} = (\text{Tmax} - \text{T}) \,/\, \text{Tmax}$$

If the stress relaxation rate is 50% or less, fatigue of the rubber-cord composite can be suppressed and, for example, a rubber hose formed thereof will suffer little from a decrease in caulking pressure, thus serving for production of rubber products with longer life. There are no specific limitations on the method to use for producing a rubber-reinforcing fiber cord having a stress relaxation rate of 50% or less, but it can be achieved by, for example, using only a latex (L) having a glass transition temperature of -30°C or less, adding an adhesive having a mixing ratio between the resorcinol-formaldehyde initial condensate and rubber latex (resorcinol-formaldehyde initial condensate / rubber latex) of 1/8 or less by solid content weight, and then performing heat treatment at a temperature of 180°C to 220°C after the addition of the adhesive.

The rubber-reinforcing fiber cord according to the present invention preferably has a stress relaxation inclination of 27 or less, more preferably 25 or less, in the rubber-cord composite compression test. The stress relaxation inclination is the inclination of the approximate straight line that is obtained when the change in stress that occurs during the 2 hour standing period after the time of maximum compression in the rubber-cord composite compression test is plotted on a logarithmic graph. If the inclination is 27 or less, it is preferable because it serves to suppress the fatigue of the rubber-cord composite. There are no specific limitations on the method for obtaining a rubber-reinforcing fiber cord that shows a stress relaxation inclination of 27 or less in the rubber-cord composite compression test, but it can be achieved by, for example, applying a pressure of 0.5 MPa or more in a nip roll apparatus while controlling the temperature of the heat treatment that is performed after adding an adhesive at 180°C to 220°C.

The rubber-reinforcing fiber cord according to the present invention preferably shows a maximum stress of 500 N or more, more preferably 600 N or more, in the rubber-cord composite compression test. Controlling it at 500 N or more serves to allow the rubber-cord composite to show a large initial stress and, for example, a rubber hose formed thereof will permit an increased caulking pressure, serving to prevent liquid leakage etc. from the rubber hose. There are no specific limitations on the method to use for producing a rubber-reinforcing fiber cord showing a maximum stress of 500 N or more in the rubber-cord composite compression test, but it can be achieved by, for example, using only a latex (L) having a glass transition temperature of -30°C or less, adding an adhesive having a mixing ratio between the resorcinol-formaldehyde initial condensate and rubber latex (resorcinol-formaldehyde initial condensate / rubber latex) of 1/8 or less by solid content weight, and then performing dry treatment at a cord tension of 1.0 to 2.0 cN/dTex.

The rubber-cord composite compression test will be described later.

The air diffusivity of the rubber-reinforcing cord according to the present invention is preferably 130 (mm·1000)/(min·%·dtex) or less, more preferably 100 (mm·1000)/(min·%·dtex) or less. Controlling the air diffusivity as described above, leakage of the liquid from the hose can be easily prevented. Here, % in the unit means the proportion accounted for by the adhered resin. The air diffusivity indicates the amount of air leaking from the inside of the cord in the rubber-cord composite or through a gap between the cord and the rubber, and it is preferably as small as possible.

To apply the adhesive to organic fiber or a raw cord, a preferable method is to immerse them in a dipping liquid containing the adhesive. In the dipping liquid, the solid content of the adhesive is preferably 3 to 30 wt%, more preferably 5 to 25 wt%. Controlling the solid content of the adhesive in the dipping liquid within the above range serves to obtain a sufficient adhesive strength, allow the dipping liquid to maintain appropriate storage stability, and ensure a good balance to achieve uniform adhesion of the dipping liquid over the surface of the organic fiber cord.

The amount of the adhesive adhered on the rubber-reinforcing fiber cord is preferably in the range of 0.2 to 5 wt%, more preferably in the range of 0.5 to 4 wt%, relative to the weight of the rubber-reinforcing fiber cord. Controlling the amount of the adhered adhesive within the above range serves to obtain a favorable adhesive strength and allow the cord to maintain an appropriate flexibility, thereby improving the fatigue resistance. Furthermore, it also prevents the rolls from gumming up with solid components in the processing steps, thereby serving to realize a high operation stability.

In order to control the amount of the adhesive adhered to the organic fiber or the raw cord, good methods include, for example, squeezing by a pressure welding roller, scraping by a scraper or the like, blowing by compressed air, and suctioning.

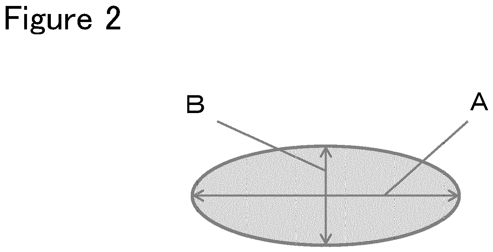

The ratio (A/B) of the major axis A to the minor axis B of the cross section of the rubber-reinforcing fiber cord is preferably 1.3 or more to form a flattened shape. Here, the major axis A refers to the longest diameter across the cross section of the cord, and the minor axis B refers to the longest diameter orthogonal to the major axis A. Fig. 2 shows the relationship among the cord cross section, major axis A, and minor axis B. To form a cord having a cross section of a flattened shape, any appropriate method can be used such as a method in which an adhesive is applied to a raw cord (twisted cord) and then drying and heat treatment steps are carried out, followed by winding the cord while pressing it in a nip roll apparatus or the like, and a method in which a cord is formed while passing it through a flattened mold, followed by winding. When a nip roll apparatus is used to apply a pressure, the cord can be flattened by applying a pressure of 0.5 MPa or more to the cord.

The rubber-reinforcing cord according to the present invention can be produced by carried out the steps described above.

According to the present invention, it is possible to obtain a rubber-reinforcing fiber cord that shows improved heat resistant adhesiveness and practically sufficient adhesive strength to rubber during the rubber vulcanization step or during the use of products. Therefore, a rubber product that contains the rubber-reinforcing fiber cord according to the present invention has a practically sufficient adhesive strength between the fiber cord and the rubber, and can withstand long-term use when used as a tire, a belt, or a hose. Furthermore, the rubber-cord composite will be less liable to a significant deterioration in stress relaxation, serving to provide rubber hoses that show improved performance, in particular, hoses that undergo a less decrease in caulking pressure, and can withstand longer-term use.

EXAMPLES

The present invention will now be illustrated in more detail with reference to examples, but it should be understood that the invention is not construed as being limited to these examples. The methods used for the measurement and evaluation of characteristic values of the rubber-reinforcing cord according to the present invention (hereinafter occasionally referred to as "the cord") are as described below.

(1) Amount of adhered treatment agent

This was determined by the mass based method according to JIS L 1017 (2002) 8.15 b).

(2) Initial peel strength and heat resistant peel strength of adhesion

A cord sample was wrapped around an aluminum plate without gaps, and an EPDM based rubber containing the components shown in Table 1 was attached to one side of the aluminum plate. Evaluation for the initial peel strength of adhesion was carried out after press vulcanization at 150°C for 30 minutes and evaluation for heat resistant peel strength of adhesion was carried out after press vulcanization at 170°C for 70 minutes. At this time, the thickness of the rubber was set to 3 mm, and the press pressure was adjusted so as to set the surface pressure on the rubber and the fiber cord at 3 MPa. For the winding of the fiber cord on the aluminum plate, the fiber cord was wound 200 mm length in the fiber direction and 30 mm width in the direction perpendicular to the fiber direction for each level, and the tension in the winding step was 0.5 cN/dTex. After leaving it to stand to cool, the rubber-side part of the sample to which the cord was adhered was cut and taken out from the aluminum plate, and the sample was further cut to a width of 20 mm while maintaining the length of 200 mm. After placing this sample in an environment at a temperature of 20°C and a humidity of 65%, the fiber cord was peeled from the rubber at a rate of 50 mm/min using a RTM-100 Tensilon Tester manufactured by Orientec Corporation while maintaining the angle between the rubber and the fiber cord at 90° to determine the integrated peel force which was represented in N/20 mm.

[Table 1]

[Table 1]

| Component | Parts by weight |
| --- | --- |
| EPDM | 100 |
| HAF-carbon black | 90 |
| process oil (product name: A/O MIX) | 40 |
| Zinc oxide | 5 |
| stearic acid | 5 |

(continued)

| Component | Parts by weight |
|---|---|
| vulcanizing agent (sulfur) | 4 |
| vulcanization accelerator (product name: Nocceler CZ) | 3 |

(3) The Gurley cord hardness

After cutting out a 1 m long portion from the treated cord, a metallic hook was attached to one end thereof while a weight of 300 g was attached to the other end thereof, and it was hung vertically in the air for 24 hours in an environment controlled at a temperature of 25°C and a relative humidity of 40% to prepare a sample for measurement.

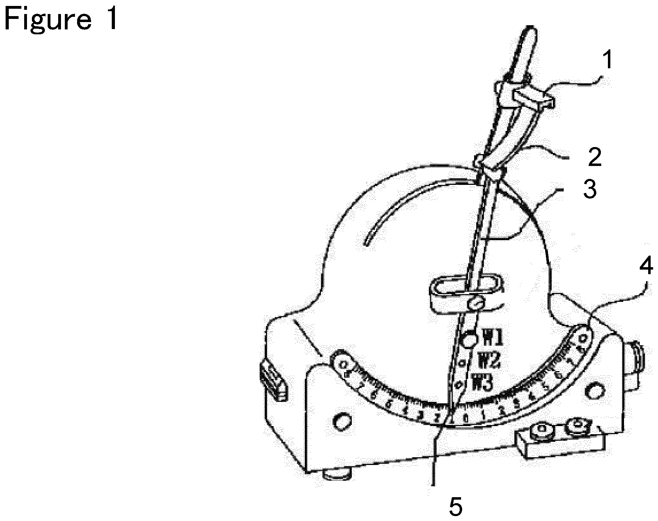

This was cut into a 38.1 mm (1.5 inch) specimen and the Gurley cord hardness was measured with Gurley's Stiffness Tester manufactured by Yasuda Seiki Co., Ltd. Fig. 1 shows a perspective view of Gurley's Stiffness Tester.

The procedure for attaching and testing the specimen is as follows: (a) the chuck 1 is fixed at a position suited to the specimen length and the specimen 2 is attached. (b) Since load setting holes are located at positions of 25.4 mm (1 inch) (W1 in Fig. 1), 50.8 mm (2 inches) (W2 in Fig. 1), and 101.6 mm (4 inches) (W3 in Fig. 1) from the shaft in the lower part (below the bearing) of the rotating rod 3, an appropriate load weight and hole position are set according to the flexibility of the specimen 2. Here, an appropriate load and hole position should be chosen so that the needle 5 points to a value between 2 and 4 on the dial 4. (c) After setting the tester to suit the specimen 2, the drive button is pressed to move the drive shaft to the right and left, and the numerical value on the dial 4 pointed by the needle is read to the nearest 0.1. (e) For one specimen 2, measurements are taken at the right and left positrons from 10 test pieces (a total of 20 measurements), and they are averaged to give a value that represents the specimen. The calculation procedure is as follows. The average of the measurements was calculated by the following equation:

$$\cdot \text{ Gurley code hardness (mN)} = R \times \{(W1 \times 25.4) + (W2 \times 50.8) + (W3 \times 101.6)\} \times (L - 12.7)2 / W \times 3.375 \times 10 - 5$$

wherein

R: average of the measurements
W1: load applied to the load position (hole) at 25.4 mm (in grams)
W2: load applied to the load position (hole) at 50.8 mm (in grams)
W3: load applied to the load position (hole) at 101.6 mm (in grams)
L: specimen length (mm)
W: width of test piece (code gauge) (mm)

(4) AFM analysis

After embedding the rubber-reinforcing fiber cord prepared above in epoxy resin, it was cut perpendicularly to the fiber axis using a microtome to expose a cross section of the cord, and the vicinity of the interface between the resin and the fiber was observed under a scanning probe microscope (Dimension Icon) manufactured by Bruker AXS Inc. Under an AFM set to the force volume measuring mode, observation was performed over a 4 pm × 4 pm area scanned by an Olympus OMCL-AC240TS silicon cantilever (spring constant: 2 N/m), and a dynamic compressive complex modulus mapping image was obtained by analyzing the resulting force curve (fitting according to the JKR theory). From the elastic modulus mapping image obtained, resin portions not including fiber portions were separated and their elastic modulus values were estimated, followed by calculated their integral mean to represent the resin hardness (MPa).

(5) Proportion of separation between rubber and single yarn after the vulcanization step

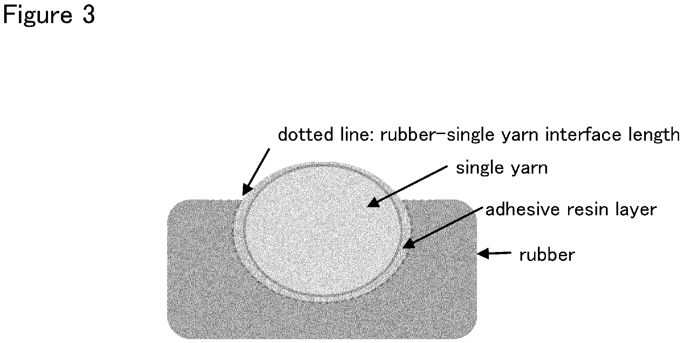

A sample was prepared by the same procedure as described in "(2) Initial peel strength", and the central portion was cut at an angle of 90° from the length direction of the cord, followed by taking SEM photographs of the cross section. Then, 10 single yarns that are in contact with the rubber are selected appropriately for measuring the rubber-single yarn separation (the rubber and single yarns are usually in contact with an adhesive layer present in between). For each of the selected single yarns, the proportion (%) of the length of the portion where the rubber and the single yarn were separated to the length of the portion where the single yarn was in contact with the rubber was calculated, and the average value (n = 10) was adopted to represent the proportion of the separation between the rubber and the single yarns after the vulcanization step. Here, the length of the portion where the single yarn was in contact with the rubber means the length measured along the outer circumference of the single yarn (see Fig. 3). Here, separation commonly occurs between the rubber and the adhesive layer, and the length of the separation was also measured along the outer circumference of the single yarn.

(6) Stress relaxation rate measured in the rubber-cord composite compression test

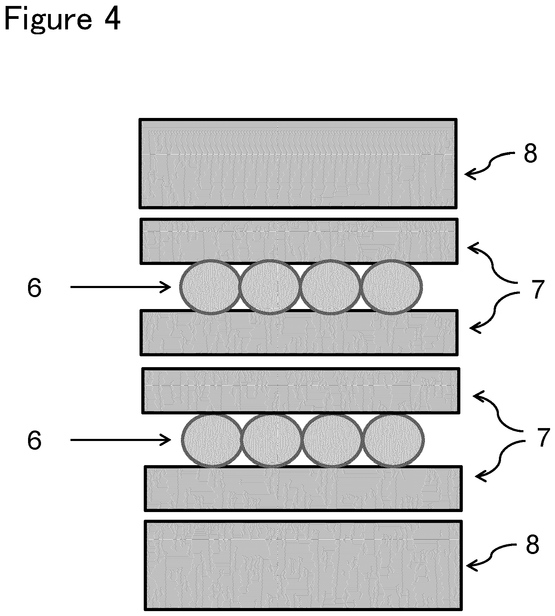

As shown in Fig. 4, the EPDM rubber composed of the components given in Table 1 was molded to the same thickness as the cord gauge of the cord to be evaluated, and pieces of the cord were arranged on the upper surface of the rubber plate while applying a tension to achieve 60,000 dtex per inch (25.4 mm), followed by attaching another EPDM rubber plate with the same thickness from above. A tension 0.5 cN/dTex was applied when arranging pieces of the cord. Two sets of this were prepared and stacked, and EPDM based rubber plates having a thickness equal to twice the cord gauge were bonded to the top and bottom of the stack, and the press vulcanization was performed at 150°C for 30 minutes. The positional relationship between the cord and the rubber plate is shown in Fig. 4. At this time, the press pressure was adjusted so as to set the surface pressure on the rubber and the cord at 3 MPa. After leaving it to stand to cool, the sample was cut to provide a sample for measurement having a size of 25.4 mm laterally and 10 mm longitudinally, wherein the longitudinal direction coincides with the length direction of the cord. In an environment at a temperature of 20°C and a humidity of 65%, the specimen for measurement was compressed by an RTM-100 Tensilon Tester manufactured by Orientec Corporation at a rate of 1 mm/min to a distance equal to seven times the cord gauge using a indenter with a contact area of 2 mm × 3 mm, followed by maintaining the state for 2 hours. The stress relaxation rate was calculated by the following equation wherein the maximum stress (Tmax) is the stress at the moment the maximum compression is applied and T is the stress after leaving the sample for 2 hours.

$$\text{Stress relaxation rate (\%)} = (\text{Tmax} - \text{T}) / \text{Tmax}$$

(7) Stress relaxation inclination measured in the rubber-cord composite compression test In the rubber-cord composite compression test (6), the change in stress from the time of maximum compression to the time of 2 hour retention was plotted on a logarithmic graph, and the inclination of the approximate straight line was calculated.

(8) Maximum stress in the rubber-cord composite compression test

In the rubber-cord composite compression test (6), the stress at the time of maximum compression was defined as the maximum stress.

(9) Ratio (A/B) between major axis A and minor axis B of cross section of the rubber-reinforcing fiber cord

After cutting the code at randomly selected 20 points, and each cross section was photographed by a microscope at a magnification of 400 times, and the major axis A and the minor axis B were measured in the photograph, followed by calculating the average (n = 20) of the A/B values.

(10) Air diffusivity

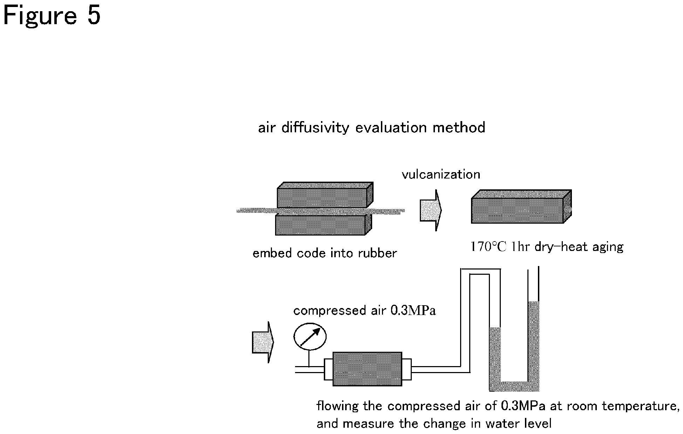

The air diffusivity was measured as follows (Fig. 5 shows an outline of the test piece for measurement and the measuring device). Two sections of the cord were arranged side by side in the length direction between two EPDM based rubber plates (1 cm wide × 5 cm long × 0.5 cm thick) composed of the components given in Table 1, and press vulcanization was performed at 160°C for 30 minutes to prepare a 5 cm long test piece for measurement in which the end faces of the cord sections were exposed at both ends. The test piece for measurement was left for 1 hour in an air circulation type dry heating oven set at 170°C, taken out, and allowed to cool to room temperature. The device was able to apply a certain level of air pressure to the end face of the test piece for measurement where the end faces of the cord sections were exposed whereas a U-shaped tube with a diameter of 6 mm containing water was connected to the other end face to allow the diffusivity of air passing through the cord to be calculated from the change in the height of the water column. Under an air pressure maintained at 0.3 Mpa, the test piece was left to stand at room temperature (23°C) for 5 minutes and then the change in water level (mm) was measured to determine the air diffusion ((mm·1000)/(min·%·dtex)) per minute, per unit amount of the adhesive, and per unit fineness.

(Example 1)

A dipping liquid containing an RFL adhesive composed of a resorcinol-formalin initial condensate (RF) and a rubber latex (L) mixed at a RF/L ratio of 1/20 by solid content was prepared. The preparation method for the RFL adhesive based dipping liquid is as described below.

The initial condensate (RF) of resorcinol (R) and formalin (F) was a resorcinol-formalin initial condensate having a (R/F) mole ratio of 1/2 and a solid content of 20 wt% and aged for 6 hours in the presence of a sodium hydroxide catalyst. Thereafter, the rubber latex described below was added to bring the solid content to 20%, and after aging for 24 hours, ion exchanged water was added to prepare a RFL adhesive based dipping liquid having a solid content of 10 wt%.

- Rubber Latex: 2518FS (manufactured by Zeon Corporation, Tg = -44°C)

A polyethylene terephthalate multifilament yarn of 1,670 dTex (Tetron (registered trademark) 1670-288-707C, manufactured by Toray Industries, Inc.), to which the polyepoxide compound described below had been added to 0.3 wt% beforehand, was twisted at a twist of 160 t/m to obtain an untreated cord (raw cord).

- Polyepoxide compound: EX-421 (manufactured by Nagase ChemteX Co., Ltd.)

The untreated code was immersed in the RFL adhesive based dipping liquid using a Computreater treating machine (manufactured by CA Litzler Co. Inc.), and then dried (dry treatment) at 120°C for 2 minutes, followed by heat treatment (hot treatment) at 190°C for 0.5 minute and additional heat treatment (normalization treatment) at 190°C for 0.5 minute. The treated cord was bent at 120° using an edge blade and mechanically softened under a tension of 3.5 cN/dtex to obtain a rubber-reinforcing fiber cord.

The adhesion amount of the adhesive, proportion of separation between the rubber and single yarns after the vulcanization step, hardness (integral mean of hardness) measured by AFM, Gurley cord hardness, air diffusivity, initial peel strength, and heat resistant peel strength of the resulting treated cord were measured. Results are shown in Table 2.

(Examples 2 to 6 and Comparative examples 1 to 6)

Except that the RF/L ratios, heat treatment temperatures, and adhesion amounts of adhesives were changed from those used in Example 1 as shown in Tables 2 and 3, treatment was carried out under the same condition as in Example 1 and evaluation was performed in the same manner. Evaluation results are also given in Tables 2 and 3.

[Table 2]

[Table 2]

| | | | Example 1 | Example 2 | Example 3 | Example 4 | Example 5 | Example 6 |
|---|---|---|---|---|---|---|---|---|
| Components of adhesive | RF/L ratio | weight ratio | 1/20 | 1/15 | 1/10 | 1/20 | 1/15 | 1/10 |
| Heat treatment temperature | drying temperature | °C | 120 | 120 | 120 | 120 | 120 | 120 |
| | heat treatment temperature | °C | 190 | 190 | 190 | 210 | 210 | 210 |
| Amount of adhesive | adhesion amount | wt% | 1.5 | 1.6 | 1.4 | 1.5 | 1.6 | 1.5 |
| Single yarn-rubber separation | peeling proportion | % | 2 | 3 | 4 | 4 | 3 | 7 |
| Hardness | AFM resin hardness | MPa | 92 | 110 | 125 | 120 | 131 | 142 |
| | Gurley cord hardness | mN | 7.5 | 8.0 | 9.1 | 8.9 | 11.2 | 12.9 |
| - | air diffusivity | mm·1000/ min·%·dtex | 37 | 55 | 48 | 70 | 75 | 84 |
| Adhesiveness | initial peel strength | N/20 mm | 82 | 76 | 70 | 73 | 67 | 60 |
| | heat resistant peel strength | N/20 mm | 76 | 69 | 60 | 67 | 59 | 51 |

EP 3 683 353 A1

[Table 3]

[Table 3]

| | | | Comparative example 1 | Comparative example 2 | Comparative example 3 | Comparative example 4 | Comparative example 5 | Comparative example 6 |
|---|---|---|---|---|---|---|---|---|
| Components of adhesive | RF/L ratio | weight ratio | 1/2 | 1/2 | 1/2 | 1/20 | 1/15 | 1/10 |
| Heat treatment temperature | drying temperature | °C | 120 | 120 | 120 | 120 | 120 | 120 |
| | heat treatment temperature | °C | 240 | 210 | 190 | 240 | 240 | 240 |
| Amount of adhesive | adhesion amount | wt% | 1.5 | 1.5 | 1.6 | 1.5 | 1.4 | 1.5 |
| Single yarn-rubber separation | peeling proportion | % | 20 | 17 | 15 | 18 | 16 | 14 |
| Hardness | AFM resin hardness | MPa | 235 | 205 | 180 | 201 | 192 | 170 |
| | Gurley cord hardness | mN | 18.1 | 16.2 | 15.1 | 16.0 | 15.2 | 14.5 |
| - | air diffusivity | mm·1000/min·%·dtex | 280 | 262 | 237 | 135 | 171 | 185 |
| Adhesiveness | initial peeling adhesive strength | N/20 mm | 45 | 50 | 54 | 51 | 55 | 59 |
| | heat resistant peeling adhesive strength | N/20 mm | 30 | 32 | 34 | 38 | 40 | 41 |

(Example 7)

Except that compared to Example 1, a sample was prepared by winding while applying a nip pressure of 1.1 MPa to cause flattening after carrying out the mechanical softening step, treatment was performed under the same conditions as in Example 1 to obtain a rubber-reinforcing fiber cord.

The adhesion amount, the flatness ratio, hardness measured by AFM (integral mean of hardness), Gurley code hardness, initial peel strength, heat resistant peel strength, stress relaxation rate in the rubber-cord composite compression test, stress relaxation inclination, and maximum stress of the resulting cord were evaluated. Results are shown in Table 4.

(Examples 8 to 13 and Comparative examples 7 to 9)

Except that compared to Example 7, the RF/L ratio and the heat treatment temperature were changed as shown in Tables 4 and 5, that the softening conditions and the nip pressure were changed, and that the Gurley hardness and the flattening ratio were changed, treatment was carried out under the same conditions as in Example 7 and evaluation was performed in the same manner. Evaluation results are also given in Tables 4 and 5.

[Table 4]

[Table 4]

| | | | Example 7 | Example 8 | Example 9 | Example 10 | Example 11 | Example 12 | Example 13 |
|---|---|---|---|---|---|---|---|---|---|
| Components of adhesive | RF/L ratio | ratio | 1/20 | 1/20 | 1/20 | 1/20 | 1/20 | 1/20 | 1/10 |
| Heat treatment temperature | dried temperature | °C | 120 | 120 | 120 | 120 | 120 | 120 | 120 |
| | heat treatment temperature | °C | 190 | 190 | 190 | 190 | 210 | 210 | 190 |
| Amount of adhesive | adhesion amount | wt% | 1.5 | 1.5 | 1.6 | 1.4 | 1.5 | 1.5 | 1.4 |
| flattened ratio | major axis A/minor axis B | - | 1.5 | 1.5 | 1.0 | 1.2 | 1.2 | 1.0 | 1.5 |
| Hardness | AFM resin hardness | MPa | 92 | 96 | 92 | 93 | 130 | 128 | 145 |
| | Gurley cord hardness | mN | 7.5 | 13.1 | 8.0 | 11.2 | 13.4 | 12.9 | 14.8 |
| Adhesiveness | initial peeling adhesive strength | N/20 mm | 82 | 73 | 79 | 69 | 73 | 60 | 72 |
| | heat resistant peeling adhesive strength | N/20 mm | 76 | 64 | 74 | 61 | 67 | 51 | 58 |
| Rubber-cord composite test | stress relaxation rate | % | 18 | 24 | 31 | 28 | 36 | 43 | 35 |
| | stress relaxation inclination | - | 22.6 | 24.3 | 25.6 | 25.6 | 28.4 | 29.4 | 27.7 |
| | maximum stress | N | 670 | 690 | 590 | 430 | 530 | 420 | 560 |

EP 3 683 353 A1

[Table 5]

[Table 5]

|  |  |  | Comparative example 7 | Comparative example 8 | Comparative example 9 |
|---|---|---|---|---|---|
| Components of adhesive | RF/L ratio | ratio | 1/2 | 1/2 | 1/20 |
| Heat treatment temperature | dried temperature | °C | 120 | 120 | 120 |
|  | heat treatment temperature | °C | 240 | 210 | 240 |
| Amount of adhesive | adhesion amount | wt% | 1.4 | 1.3 | 1.5 |
| Flattening ratio | major axis A/ minor axis B |  | 1.1 | 1.0 | 1.0 |
| Hardness | AFM resin hardness | MPa | 235 | 205 | 210 |
|  | Gurley cord hardness | mN | 18.1 | 16.2 | 14.5 |
| Adhesiveness | initial peeling adhesive strength | N/20 mm | 45 | 50 | 59 |
|  | heat resistant peeling adhesive strength | N/20 mm | 30 | 32 | 41 |
| Rubber-cord composite test | stress relaxation rate | % | 61 | 58 | 52 |
|  | stress relaxation inclination |  | 31.3 | 30.6 | 29.6 |
|  | maximum stress | N | 580 | 540 | 520 |

As seen from the results given in Tables 2, 3, 4, and 5, the rubber-reinforcing fiber cords according to the present invention that are prepared in Examples are higher in initial adhesive strength and heat resistant peel strength (heat resistant adhesive strength) and give better results for the stress relaxation rate, maximum stress, and stress relaxation inclination in the rubber-cord composite compression test, as compared to the conventional rubber-reinforcing fiber cords (Comparative examples).

EXPLANATION OF NUMERALS

1. Chuck

2. Test piece

3. Rotating rod

4. Dial

5. Needle

W1: load setting hole (25.4 mm (1 inch) from shaft)

W2: load setting hole (50.8 mm (2 inches) from shaft)

W3: load setting hole (101.6 mm (4 inches) from shaft)

6. Code

7. Rubber plate (thickness: same as the cord gauge)

8. Rubber plate (thickness: twice the cord gauge)

**Claims**

1. A rubber-reinforcing fiber cord **characterized in that** the organic fiber used is coated with a resin having an integral mean hardness of 150 MPa or less as measured by AFM.

2. A rubber-reinforcing fiber cord as set forth in claim 1, wherein the Gurley cord hardness is 12 mN or less.

3. A rubber-reinforcing fiber cord as set forth in either claim 1 or 2, wherein the separation between the rubber and the single yarns after vulcanization is 10% or less of the rubber-single yarn interface length.

4. A rubber-reinforcing fiber cord as set forth in any one of claims 1 to 3, wherein the stress relaxation rate measured in the rubber-cord composite compression test is 50% or less.

5. A rubber-reinforcing fiber cord as set forth in any one of claims 1 to 4, wherein the stress relaxation inclination measured in the rubber-cord composite compression test is 27 or less.

6. A rubber-reinforcing fiber cord as set forth in any one of claims 1 to 5, wherein the maximum stress measured in the rubber-cord composite compression test is 500 N or more.

7. A rubber-reinforcing fiber cord as set forth in any one of claims 1 to 6, wherein the ratio (A/B) of the major axis A to the minor axis B of the cross section of the rubber-reinforcing fiber is 1.3 or more.

8. A rubber-reinforcing fiber cord as set forth in any one of claims 1 to 7, wherein the air diffusivity of the cord embedded in the rubber is 100 (mm·1000)/(min·%·dtex) or less.

9. A rubber-reinforcing fiber cord as set forth in any one of claims 1 to 8, wherein the organic fiber used includes at least one selected from the group consisting of polyethylene terephthalate, nylon 66, and aramid.

10. A rubber product comprising a rubber-reinforcing fiber cord as set forth in any one of claims 1 to 9.

Figure 1

EP 3 683 353 A1

# Figure 2

# Figure 3

dotted line: rubber–single yarn interface length

single yarn

adhesive resin layer

rubber

# Figure 4

# Figure 5

air diffusivity evaluation method

vulcanization

embed code into rubber

170°C 1hr dry-heat aging

compressed air 0.3MPa

flowing the compressed air of 0.3MPa at room temperature, and measure the change in water level

<table>
<tr><td colspan="3" align="center">**INTERNATIONAL SEARCH REPORT**</td><td>International application No.<br>PCT/JP2018/029751</td></tr>
</table>

**A. CLASSIFICATION OF SUBJECT MATTER**

Int. Cl. D06M15/41(2006.01)i, D02G3/44(2006.01)i, D06M15/693(2006.01)i, D06M101/32(2006.01)n, D06M101/34(2006.01)n, D06M101/36(2006.01)n

According to International Patent Classification (IPC) or to both national classification and IPC

**B. FIELDS SEARCHED**

Minimum documentation searched (classification system followed by classification symbols)

Int. Cl. B60C1/00-19/12, C09J1/00-5/10, C09J9/00-201/10, D01F1/00-6/96, D01F9/00-9/04, D02G1/00-3/48, D02J1/00-13/00, D06B1/00-23/30, D06C3/00-29/00, D06G1/00-5/00, D06H1/00-7/24, D06J1/00-1/12, D06M13/00-15/715, D07B1/00-9/00

Documentation searched other than minimum documentation to the extent that such documents are included in the fields searched

Published examined utility model applications of Japan    1922-1996
Published unexamined utility model applications of Japan  1971-2018
Registered utility model specifications of Japan          1996-2018
Published registered utility model applications of Japan  1994-2018

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2014-091801 A (NIPPON A & L INC.) 19 May 2014,<br>examples & CN 104769066 A & KR 10-2015-0083086 A | 1, 3, 4, 9, 10<br>2, 5-8 |
| Y | JP 04-002887 A (TEIJIN LTD.) 07 January 1992, page 1, lower right column, line 2 to line 3, table 1 (Family: none) | 2, 5, 6, 8 |
| Y | JP 08-158261 A (TORAY INDUSTRIES, INC.) 18 June 1996, paragraph [0001], table 2 (Family: none) | 2, 5, 6, 8 |
| Y | JP 2013-181268 A (TEIJIN LTD.) 12 September 2013, claims, paragraphs [0001], [0024] (Family: none) | 7 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05.11.2018 | Date of mailing of the international search report<br>13.11.2018 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/029751

C (Continuation). DOCUMENTS CONSIDERED TO BE RELEVANT

| Category* | Citation of document, with indication, where appropriate, of the relevant passages | Relevant to claim No. |
|---|---|---|
| A | JP 05-156513 A (ASAHI CHEMICAL INDUSTRY CO., LTD.) 22 June 1993 (Family: none) | 1-10 |
| A | JP 60-071240 A (ASAHI CHEMICAL INDUSTRY CO., LTD.) 23 April 1985 (Family: none) | 1-10 |
| A | JP 2017-150106 A (TORAY INDUSTRIES, INC.) 31 August 2017 (Family: none) | 1-10 |
| A | JP 2004-218189 A (ASAHI KASEI FIBERS CORP.) 05 August 2004 (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11286876 B
- JP 2008202182 A
- JP SHO62278395 B

**Non-patent literature cited in the description**

- **JOHNSON, K. L. ; KENDALL K. ; ROBERTS, A. D.** Surface energy and the contact of elastic solids. *Proceedings of the Royal Society of London, Series A*, 1971, vol. 324, 301-313